Europäisches Patentamt

European Patent Office

Office européen des brevets

(11) Publication number: **0 190 678**
**B1**

# EUROPEAN PATENT SPECIFICATION

(45) Date of publication of patent specification: **23.11.88**

(51) Int. Cl.⁴: **B 62 D 5/04**

(21) Application number: **86101281.3**

(22) Date of filing: **31.01.86**

(54) **Method of operating electric power assisted steering systems and electric power assisted steering system.**

(30) Priority: **02.02.85 JP 19152/85**
**20.03.85 JP 57225/85**

(43) Date of publication of application:
**13.08.86 Bulletin 86/33**

(45) Publication of the grant of the patent:
**23.11.88 Bulletin 88/47**

(84) Designated Contracting States:
**DE GB**

(56) References cited:
**EP-A-0 071 909**
**EP-A-0 089 512**
**EP-A-0 101 579**
**GB-A-2 035 931**
**US-A-4 527 653**

**PATENT ABSTRACTS OF JAPAN, vol. 3, no. 116
(M-74), 27th September 1979, page 60 M 74; &
JP - A - 54 90726 (KOMATSU SEISAKUSHO)
18-07-1979 (Cat. D,A)**

**PATENT ABSTRACTS OF JAPAN, vol. 4, no. 120
(M-28), 26th August 1980, page 28 M 28; & JP -
A - 55 76760 (NIPPON SEIKO) 10-06-1980 (Cat.
D,A)**

(73) Proprietor: **HITACHI, LTD.**
**6, Kanda Surugadai 4-chome Chiyoda-ku
Tokyo 100 (JP)**

(72) Inventor: **Noto, Yasuo**
**1034, Higashiishikawa-2-chome
Katsuta-shi (JP)**
Inventor: **Sugiura, Noboru**
**1360-27, Kasaharacho
Mito-shi (JP)**
Inventor: **Ouchi, Hideyuki**
**1783-42, Gumizawacho Totsuka-ku
Yokohama (JP)**

(74) Representative: **Patentanwälte Beetz sen. -
Beetz jun. Timpe - Siegfried - Schmitt-Fumian
Steinsdorfstrasse 10
D-8000 München 22 (DE)**

## Description

The invention relates to a method of operating electric power assisted steering systems for automobiles and the like and a corresponding power assisted steering system which provide an excellent steering feeling.

Power assisted steering systems are widely used in automobiles of various classes and serve for reducing fatigue of the driver and ensuring safety in driving.

Heretofore, power steering systems of the hydraulic pressure type have been used primarily. However, in recent years, in view of the possibility of providing a variety of controls and wasting less energy, electric power assisted steering systems have been developed.

This type of systems comprises an electric motor as actuator for assisting the steering.

JP—A—55—76760 discloses an electric motor assisted power steering device comprising a steering shaft torque detector, a steering angle detector and a car speed detector, wherein the electric motor is actuated in response to the detected torque, steering angle and car speed signals.

EP—A—0 101 579 relates to an electric power assisted rack and pinion steering gear for turning steerable wheels. According to this known system, the electric motor is actuated in response to a predetermined amount of torque applied to the steering column of the vehicle and eventually also in accordance with the vehicle speed.

However, the conventional electric power assisted steering systems are disadvantageous in that since the assisting steering force is provided through a reduction mechanism from an electric motor rotating at a high speed, their characteristics are very undesirable for the steering feeling in handling the steering wheel due to the inertia of the electric motor, and due to the large frictional resistance encountered when the electric motor is rotated manually without energization thereof by exerting a steering force from the output side of the reduction mechanism.

As to the characteristic which appears in the handling of the steering wheel due to the inertia of the electric motor and which is undesirable for the steering feeling, the above-mentioned JP—A—55—76760 discloses a method of utilizing a differential characteristic in the control of the motor for improving the steering feeling.

However, this method requires a differential circuit and the like, and provision of the differential characteristic in turn requires a new countermeasure for noises, which increases the manufacturing costs. Regarding the undesired steering feeling due to the frictional resistance, no particular improvement is obtained, and as a whole, a satisfactory improvement in the steering feeling cannot be realized. In this respect, this deterioration of the steering feeling due to the frictional resistance appears as a significant decrease in the restoring force which is normally present when the steering angle is other than zero (neutral position), or appears as an extinguishment of the restoring force.

Furthermore, when a steering force is applied to the steering wheel, an assisting force is added by the electric motor. However, since the motor has an inertia, in order to accelerate the motor, the driver has to promote or pull the motor by the steering force exerted on the steering wheel so that inertia energy of the motor proportional to the square of the rotational speed of the motor is added, and also in order to stop the motor, the driver has to assist to stop the motor through the steering wheel. In particular, when the driver tries to turn the steering wheel fast, a shock occurs due to the load developed by the delay in time until the motor reaches the required rotational speed. In order to compensate for this load, there is provided a control circuit which employs the differential characteristic as mentioned earlier. However, this method involves the drawback that since the energy for acceleration and deceleration needed for the motor is not taken into account, the energy which is compensated for by the steering speed is insufficient.

On the other hand, in recent hydraulic type power steering systems, it is proposed to improve the straight advancing performance by providing a restoring force in the power assisted steering system as disclosed in JP—A—54—90726. However, there has been entirely no consideration as to how to control the restoring force at the time of forward acceleration, backing, and normal travelling for improving the safety during running and the straight advancing performance of the automobile.

It is the object of the present invention to provide a method of operating electric power assisted steering systems and a corresponding system capable of satisfactorily following the steering speed of the steering wheel for providing an excellent steering feeling and avoiding the drawbacks involved with the prior art systems.

The above object is achieved according to claims 1 and 5. The dependent claims relates to preferred embodiments.

The method of operating an electric power assisted steering system of autombiles according to the invention comprises the steps of detecting the steering torque exerted on the steering wheel by the driver, the steering angle and eventually the vehicle speed, and of actuating the electric motor in response to the detected values, and is characterized by the following steps:

a) deciding based on the detected steering torque and the detected steering angle whether the turning of the steering angle is accelerated or decelerated,

b) generating either a function relating to the acceleration of the steering wheel or a different function relating to the deceleration of the steering wheel, in accordance with the decision of step a), and

c) providing an assisisting force to the steering wheel via the electric motor in correspondence to the respective function generated in step b).

The electric power assisted steering system according to the invention for carrying out the above method comprises

A) a torque sensor for detecting the steering torque exerted on the steering wheel,

B) a steering angle sensor for detecting the steering angle,

C) eventually a vehicle speed sensor for detecting the vehicle speed, and

D) an electric motor controlled in response to the output signal of the torque sensor, the steering angle sensor and the vehicle speed sensor, and is characterized by

E) acceleration/deceleration deciding means for deciding based on the outputs of the torque sensor and the steering angle sensor whether the turning of the steering wheel is accelerated or decelerated,

F) function generating means for generating a function relating to the acceleration and a different function relating to the deceleration in accordance with the result of the acceleration/ deceleration deciding means, and

G) assisting force providing means for providing an assisting force to the steering wheel in correspondence to the respective function generated by the function generating means.

In the present invention, a motor acceleration/deceleration function according to the electric motor rotational speed is set, and in response to an increase and a decrease in the steering force of the steering wheel, the speed of the electric motor is controlled by using that function thereby to enable to satisfactorily follow the steering speed of the steering wheel.

Further, the movement of the automobile whether it is forward or reverse, as well as the amount of acceleration of the vehicle is detected, and a current is supplied to an armature of the electric motor in accordance with the detected amount of acceleration to provide a restoring force to the wheels in a direction to make the steering angle of the automobile become zero thereby to improve the straight advancing performance of the automobile at the time of acceleration and to improve the steering performance at the time of backing.

The invention will become more apparent from the following detailed description of preferred embodiments with reference to the drawings wherein are:

Fig. 1: a schematic representation of an embodiment of an electric power assisted steering system in accordance with the present invention;

Fig. 2: a characteristic diagram of the torque sensor in Fig. 1;

Fig. 3: a characteristic diagram of the steering angle sensor in Fig. 1;

Fig. 4: a rotational speed-torque characteristic diagram of the electric motor;

Fig. 5: an armature current-torque/rotational speed characteristic diagram of the electric motor;

Fig. 6: a block diagram of a first embodiment of the present invention;

Figs. 7(A) and (B): characteristic diagrams showing the correction torque output and the steering force at the time of acceleration;

Fig. 8: a circuit diagram of the motor control circuit of Fig. 6;

Fig. 9: a characteristic diagram showing an example of a higher order function characteristic of the dependence of the motor current on the torque sensor output;

Figs. 10 and 11: characteristic diagrams for explaining approximate characteristics with respect to the higher order function characteristic of Fig. 9;

Fig. 12: a characteristic diagram for explaining an example of a characteristic of the type of Fig. 9 provided by an embodiment of the present invention;

Fig. 13: a rotational speed-deceleration torque characteristic diagram of the motor;

Fig. 14: a rotational speed-acceleration torque characteristic diagram of the motor;

Fig. 15: a characteristic diagram of the restoring force;

Fig. 16: an operation flowchart for the assisting torque calculation;

Fig. 17: a block diagram of the system comprising a micro-computer;

Fig. 18: a flowchart showing the time schedule of the processing;

Fig. 19: a schematic representation of a second embodiment of the present invention;

Fig. 20: a block diagram of the second embodiment;

Fig. 21: a characateristic diagram of the restoring force current with respect to the steering angle;

Fig. 22: a current limit value-temperature characteristic diagram, and

Fig. 23: a flowchart of current limit determination depending on temperature.

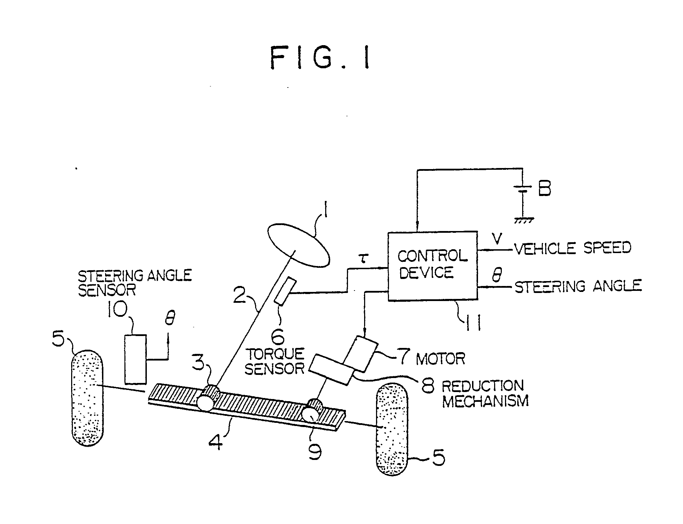

Fig. 1 shows an embodiment in which the present invention is applied to an electric power assisted steering system for automobiles, which comprises a steering wheel 1, a steering wheel shaft 2, a pinion 3, a rack 4, wheels (tires) 5, a torque sensor 6, an electric motor 7 for powsr assistance, a reduction mechanism 8, a pinion 9, a steering angle sensor 10, a battery B, and a control device 11.

This embodiment is of the so-called rack-and-pinion type, and the steering force applied to the steering wheel 1 by the driver is transmitted from the steering wheel shaft 2 to the rack 4 through the pinion 3, and the wheels 5 are turned to a predetermined steering angle.

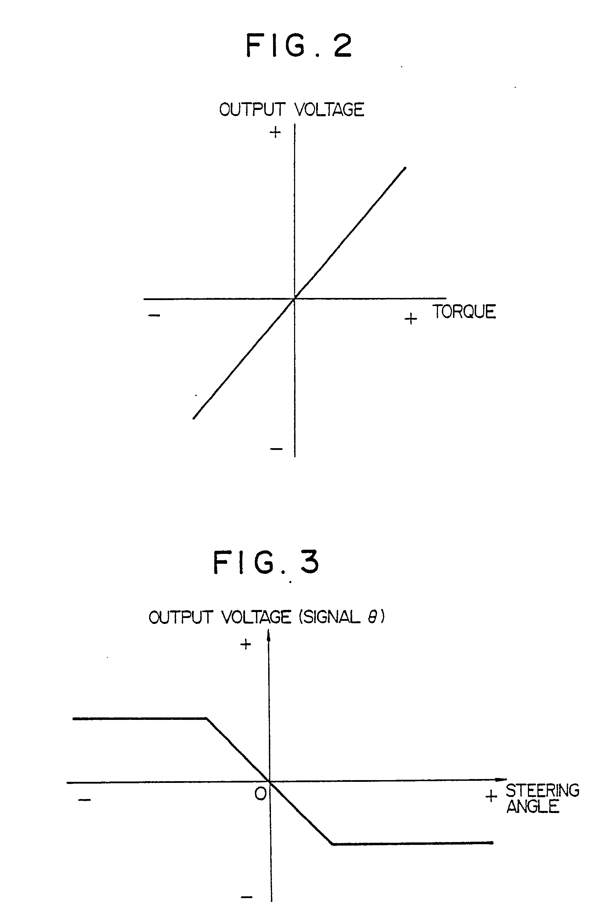

The torque sensor 6 detects the torque imparted to the pinion 3 from the steering wheel 1 through the steering wheel shaft 2 when the driver turns the steering wheel 1, and generates a signal τ indicative of the magnitude of the torque. The torque sensor 6 may be, for example, a strain gauge fixed to the steering wheel shaft 2, or may be composed of a torsion spring mechanism provided on the steering wheel shaft 2 and a variable resistor for detecting the amount of torsion; the torque sensor 6 has a characteristic, for example, as shown in Fig. 2.

The electric motor 7 operates as an actuator which applies an assisting steering force to the rack 4 through the reduction mechanism 8 comprised of a gear device or the like and through the pinion 9.

The steering angle sensor 10 detects the steering angle (turning angle) of the wheels 5, and generates a signal θ representing the steering angle in accordance with a characteristic, for example, as shown in Fig. 3, whereby the steering angle is zero when the automobile is in straight advancing condition, that is, when the wheels 5 are in neutral position. The steering angle sensor 10 may be a rotary encoder including a variable resistor or the like which detects the angle of rotation of a member which rotates as the wheels 5 are turned, or may be a linear encoder for detecting the movement of a member in a linear motion as the wheels 5 are turned.

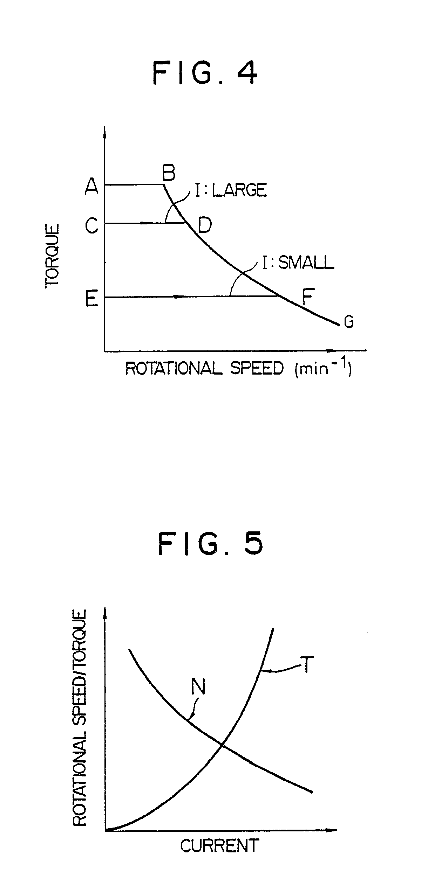

The electric motor 7 used in this power assisted steering system has a torque-rotational speed characteristic as shown in Fig. 4. With a large armature current I of the electric motor 7, the torque changes with respect to the rotational speed according to C→D→F→G as indicated in Fig. 4. Further, when the armature current I is small, the torque changes with respect to the rotational speed according to E→F→G as also indicated in Fig. 4. A→B corresponds to the maximum torque/electric current.

The characteristic of rotational speed (N) and torque (T) with respect to the armature current I of the motor 7 is shown in Fig. 5.

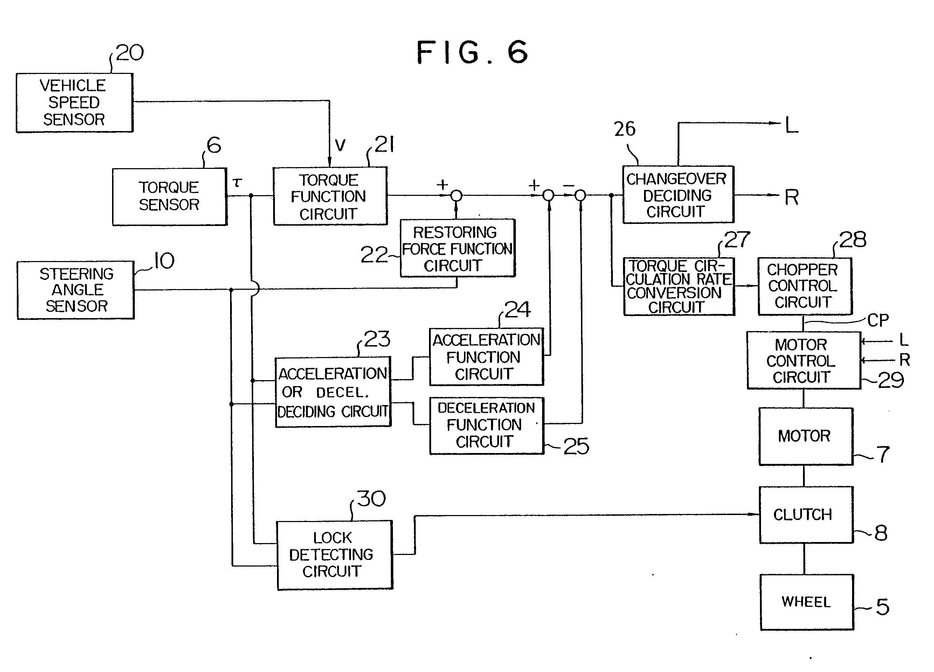

Fig. 6 shows an embodiment of the control device 11; it comprises a torque function circuit 21, a restoring force function circuit 22, an acceleration or deceleration deciding circuit 23, an acceleration function circuit 24, a deceleration function circuit 25, a changeover deciding circuit 26, a torque circulation rate conversion circuit 27, a chopper control circuit 28, a motor control circuit 29, and a lock detecting circuit 30.

Next, the operation of the control device 11 will be described.

When the steering wheel 1 is turned by the driver to apply a torque to the steering wheel shaft 2, the torque is detected by the torque sensor 6 in accordance with the characteristic in Fig. 2, and the torque signal τ is outputted.

This torque signal τ is inputted to the chopper control circuit 28 via the torque function circuit 21 and the torque circulation rate conversion circuit 27, and the torque signal τ is converted into a pulse signal CP having a duty ratio corresponding to the absolute value of the torque signal τ at that time, and then supplied to the motor control circuit 29. At this time, in the changeover deciding circuit 26, depending on whether the inputted torque signal τ is positive or negative, either a clockwise rotation signal R or a counterclockwise rotation signal L is outputted, and these signals R, L are inputted into the motor control circuit 29.

In this respect, the polarity of the torque signal τ generated by the torque sensor 6 is set beforehand such that, for example, the torque which is developed by turning the steering wheel 1 in a clockwise direction is of positive polarity, whereas the torque developed by turning the steering wheel 1 in a counterclockwise direction is of negative polarity. Accordingly, when the torque signal τ is positive, the automobile is turning to the right, and when the torque signal τ is negative, the automobile is turning to the left.

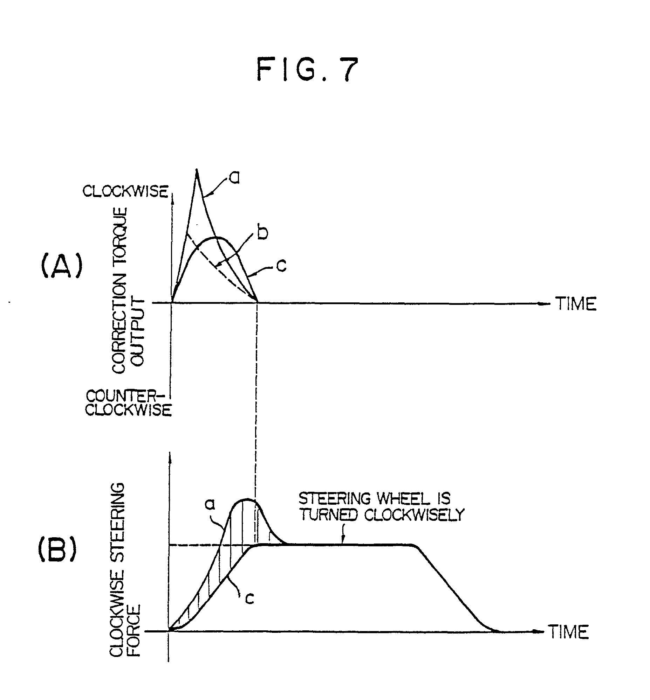

Next, the torque function circuit 21 will be described. This torque function circuit 21 outputs a torque value corresponding to an amount of correction depending on the rotational speed of the electric motor 7 so that the correction torque output characteristic assumes the characteristics a and b as shown in Fig. 7(A). The output characteristic a in Fig. 7(A) is used when the turning speed of the steering wheel 1 is high, and the output characteristic b is used when the handling speed of the steering wheel 1 is low. The curve c in Fig. 7(A) shows the correction value in the conventional differential type device. By adding such a correction torque value, when a steering force is exerted as shown by curve a in Fig. 7(B), the inertia of the electric motor 7 can be sufficiently compensated. Curve c in Fig. 7(B) shows the steering force characteristic in the conventional differential type, and the influence due to different inertias depending on the turning speed of the steering wheel 1 cannot be eliminated.

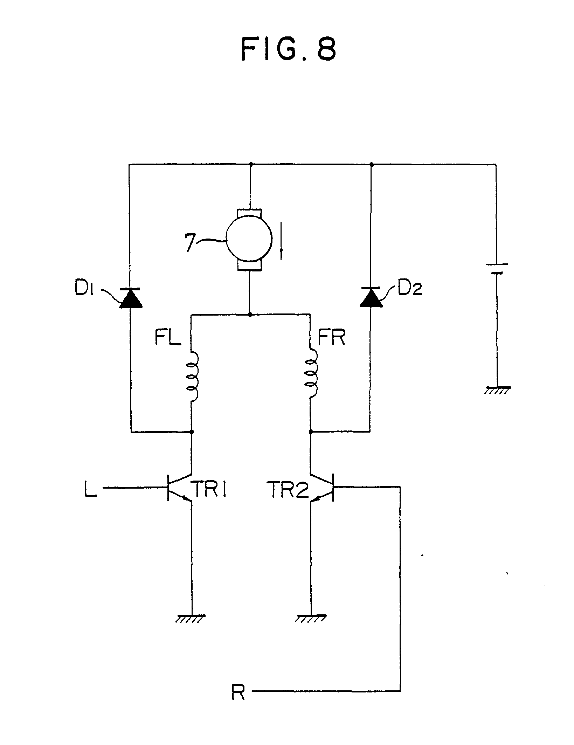

In Fig. 8, an embodiment of the motor control circuit 29 is shown; it comprises a pair of power transistors TR1 and TR2 (hereinafter, referred to as TR1 and TR2), and a pair of free wheel diodes D1 and D2. TR1 is supplied with a signal corresponding to the logical product of the counterclockwise rotation signal L and the pulse signal CP, and TR2 is supplied with a signal corresponding to the logical product of the clockwise rotation signal R and the pulse signal CP. Thus, when the clockwise rotation signal R is present, that is, when the torque signal τ is of positive polarity, TR2 is turned on, and a current is supplied to the electric motor 7 in a direction shown by the arrow in Fig. 8, and the magnitude of this current is controlled in accordance with the duty ratio of the pulse signal CP. Conversely, when the torque signal τ is of negative polarity, and the counterclockwise rotation signal L is present, the TR1 is turned on, and the current is supplied to the motor 7 in a direction opposite to the arrow in Fig. 8, and at this time, the current value is controlled similarly by the duty ratio of the pulse signal CP.

And in either case, the magnitude of the current flowing in the motor 7 is detected by a current detector (not shown) and is supplied as a feedback current signal to the chopper control circuit 28, and by such an arrangement, a feedback loop is formed so that a current corresponding to the signal being fed from the torque circulation rate conversion circuit 27 as accurately supplied to the electric motor 7.

Further, the diodes D1 and D2 serve to provide return paths when TR1 or TR2 are turned off as a result of the chopper control by the pulse signal CP.

Accordingly, when the driver turns the steering wheel 1, then in accordance with the direction and the magnitude of the turning (steering) force applied at that time, a current of a predetermined value is supplied to the electric motor 7 in a predetermined direction, and the torque generated by the electric motor 7 is imparted to the rack 4 through the pinion 9, and an assisting steering force is developed. As a result, the function of a power assisted steering system can be obtained.

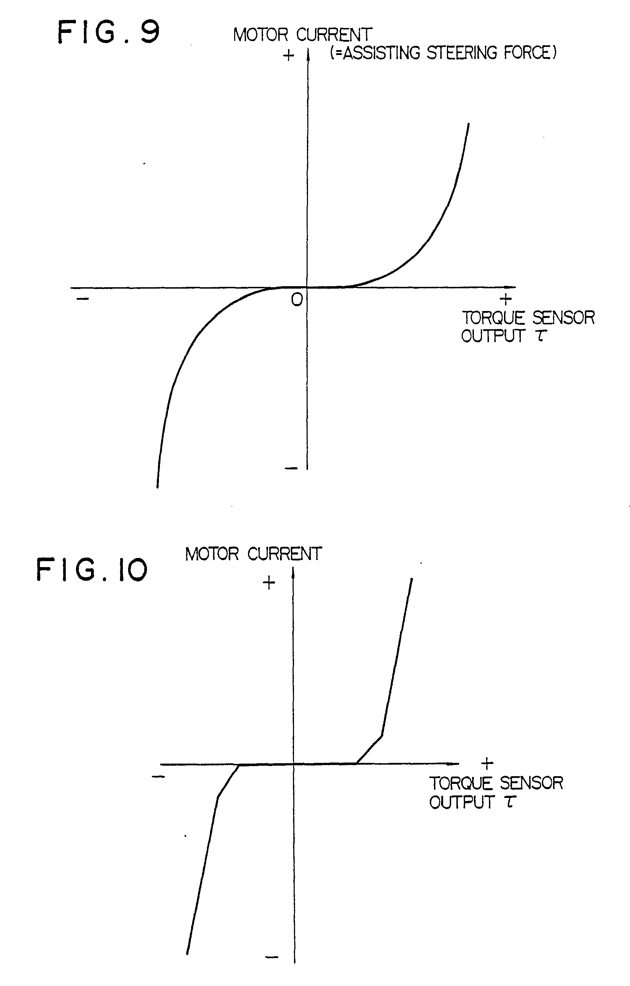

However, if the magnitude of the steering force the driver has to exert on the steering wheel 1 is too small, it will be rather difficult for the driver to drive the automobile smoothly. In this respect, it is known from experience, that it is desirable for the steering feeling to provide the assisting steering force, that is, do determine the current value of the electric motor 7 such that the current has a higher order characteristic with an offset portion as shown in Fig. 9 with respect to the signal $\tau$ from the torque sensor 6.

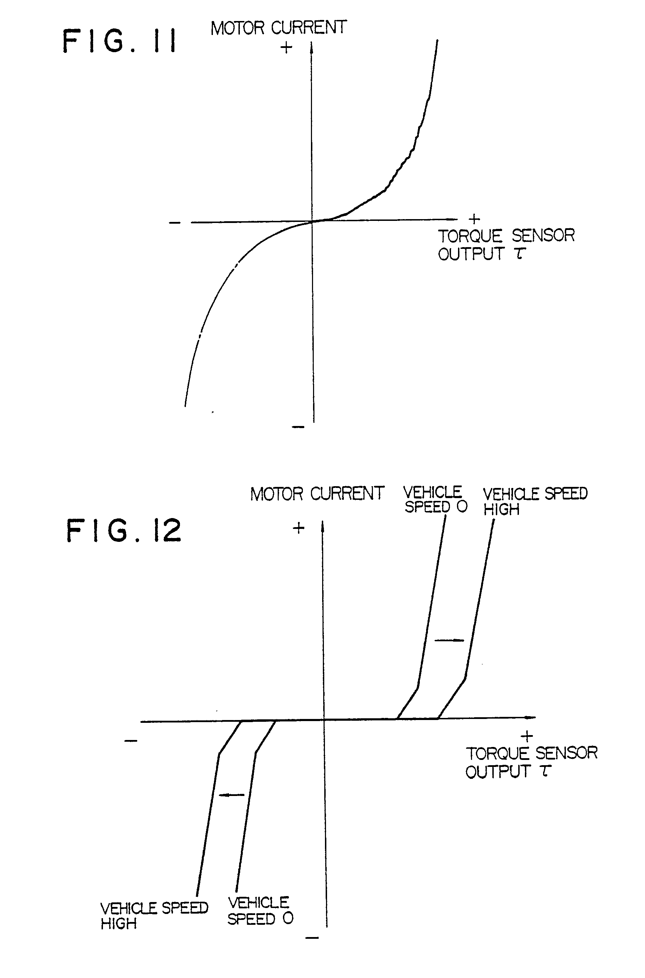

The torque function circuit 21 is provided for this purpose, and it generates an output signal according to the characteristic in Fig. 9 in response to the input signal $\tau$. In practical, however, since a torque function circuit 21 providing a smooth characteristic as shown in Fig. 9 increases the manufacturing costs, or when it is impossible to realize such a torque-current characteristic, a torque function circuit 21, for example, having an approximate characteristic formed by a polygonal line as shown in Fig. 10 or by a staircase-like line as shown in Fig. 11 may also be used according to the invention.

The force required to turn the wheels 5 to a different direction, that is, the steering force depends on the frictional resistance in the turning direction between the wheels 5 and the road surface on which the automobile is running, and this frictional resistance varies in dependence of the vehicle speed, whereby it decreases with increase in vehicle speed. Accordingly, the steering force becomes larger when the speed is lower, and thus, a very large steering force is needed to steer while the automobile is stationary, i.e. the vehicle speed is zero, and it becomes almost impossible to turn the steering wheel.

However, from the practical viewpoint, steering while the automobile is stationary is necessary, e.g., when the automobile is to be put into a garage or for parking.

On the other hand, since it becomes dangerous when the required steering force is too small while the automobile is running at a high speed, it is desirable to reduce the assisting steering force, or to stop imparting the assisting steering force when the automobile is running at high speed.

Accordingly, for this purpose, a vehicle speed signal V from the vehicle speed sensor 20 is inputted into the torque function circuit 21 and the torque signal $\tau$ is dealt with in accordance with a predetermined processing so that the width of the offset of the characteristic provided by the torque function circuit 21 becomes wide depending on the vehicle speed signal V as shown in Fig. 12.

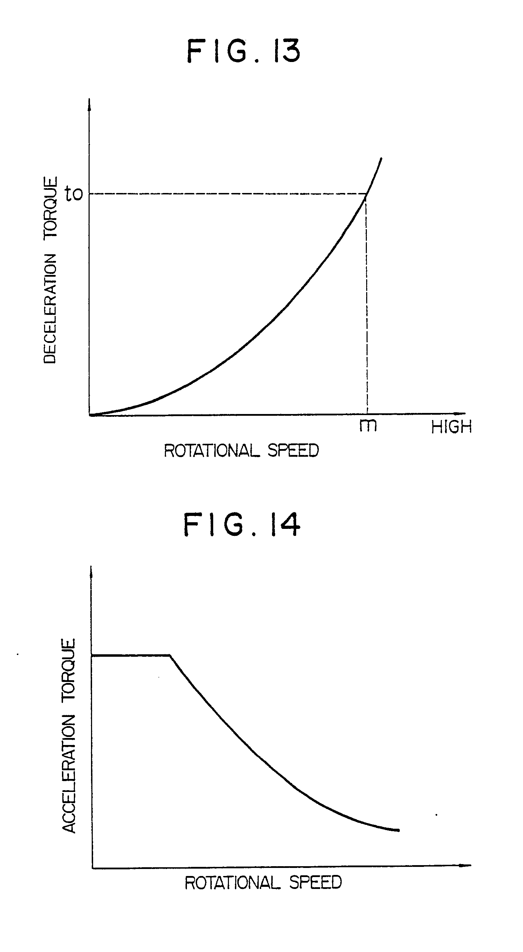

The relationship between a deceleration torque applied in reverse direction to the electric motor 7, that is, the deceleration torque, and the rotational speed of the motor 7 is represented by the characteristic as shown in Fig. 13. In other words, as the rotational speed of the electric motor 7 becomes large, the deceleration torque is increased. Accordingly, the force required to stop at a certain position by turning the steering wheel (the torque required to stop by braking the electric motor) is large as the rotational speed of the motor 7 becomes high. Further, the acceleration torque value with respect to the rotational speed of the motor 7 is shown in Fig. 14; it shows that a large acceleration torque is required when the rotational speed of the electric motor 7 is low.

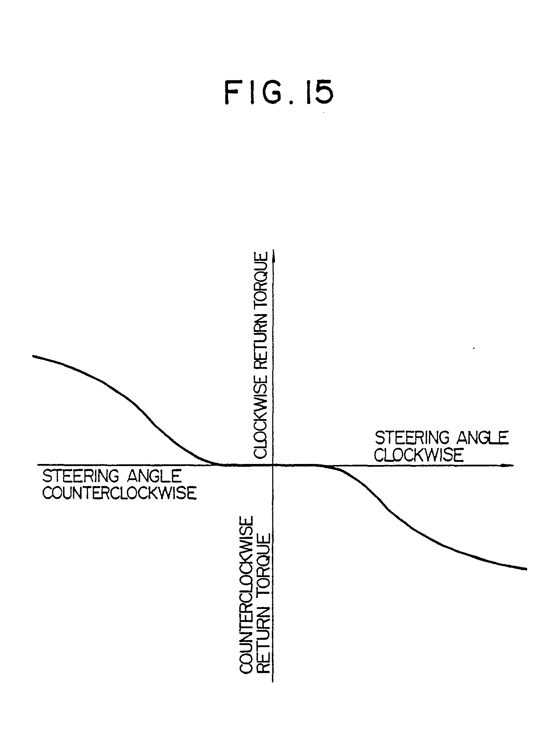

Next, the restoring force function circuit 22 in Fig. 6 will be described. The restoring force function circuit 22 is a circuit which outputs a control signal for the motor 7 so that the wheels 5 are provided with a force to return to the original position (restoring force). The relationship between the return torque and the steering angle (steering angle sensor output) is shown in Fig. 15. In other words, the larger the steering angle, the larger becomes the required torque for restoration. This restoring characteristic is an important factor which determines the steering feeling of a power assisted steering system.

Specifically, the steering system for automobiles is generally designed to provide the restoring characteristic by utilizing the caster effect and the like of the wheels serving to turn to a different direction, and accordingly, it is widely practiced driving operation to utilize the restoring force exerted on the steering wheel due to the restoring characteristic mentioned above, after a predetermined steering angle has been achieved by turning the steering wheel, and this restoring force is a main factor for providing a good steering feeling. For this reason, this restoring force must not be impaired by power assisted steering.

Further, the lock detecting circuit 30 in Fig. 6 detects the case in which no output is delivered from the steering angle sensor 10 in connection with the output of the torque sensor 6, and when such a case is detected, a solenoid of the clutch 8 is turned off.

Next, the operation of the assisting torque calculation according to an embodiment of the present invention will be explained.

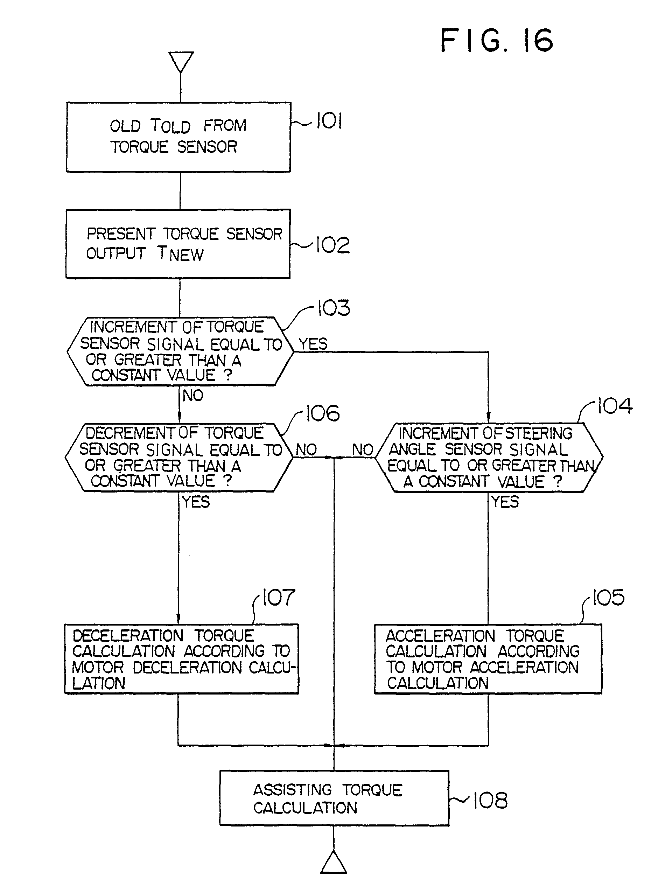

Fig. 16 shows a flowchart of the assisting torque calculation. The program of the flowchart is executed with a timer interruption of every 10 ms.

First, in step 101, a value $\tau_{OLD}$ of the last torque signal of the torque sensor 6 is read out, and in step 102 the actual output value $\tau_{NEW}$ at the present time is fetched from the torque sensor 6. Next, in step 103, both values $\tau_{OLD}$ and $\tau_{NEW}$ are compared with each other, and it is decided whether or not the differential increment $\Delta\tau$ of the output signal value of the torque sensor 6, i.e.

$$\Delta\tau = \tau_{NEW} - \tau_{OLD},$$

is equal to or greater than a constant value. If in step 103 the increment in the output value of the torque sensor 6 is decided to be greater than the constant value, then, in step 104, it is decided whether or not an increment in the signal value outputted from the steering angle sensor 10 is equal to or greater than a constant value which corresponds timewisely with the increment in the torque sensor 6. In this step 104, if the increment of the output signal of the steering angle sensor 10 is not equal to or greater than the constant value, then it is proceeded to step 108. On the other hand, if, in step 104, the increment of the output signal value of the steering angle sensor 10 is decided to be equal to or greater than the constant value, then, in step 105, an acceleration torque calculation in accordance with a motor acceleration calculation (acceleration to attain the characteristic as shown in Fig. 7) is executed, and then it is proceeded to step 108.

On the other hand, if in step 106 the increment of the output signal of the torque sensor 6 is decided as being not equal to or greater than the constant value, it is decided in step 106 whether or not the decrement of the torque sensor output signal is equal to or greater than a constant value. In this step 106, if the decrement is decided as being not equal to or greater than the constant value, it is proceeded to step 108, whereas, if the decrement is decided as being equal to or greater than the constant value, in step 107, a deceleration torque calculation according to a motor deceleration calculation (corresponding to the deceleration torque characteristic shown in Fig. 13) is executed, and then it is proceeded to step 108. Next, in step 108, calculation of the assisting torque as shown in Fig. 12 is executed.

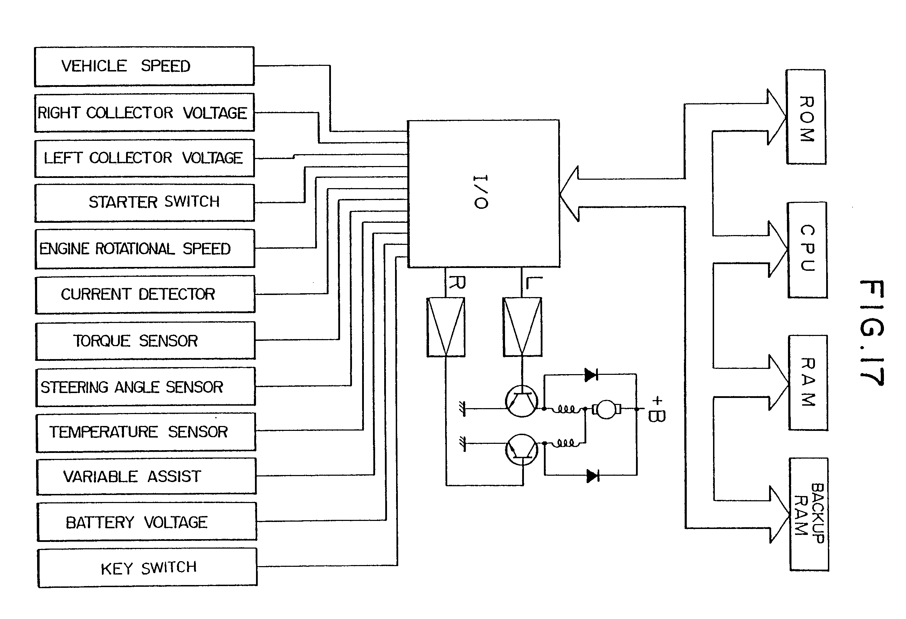

Fig. 17 shows a block diagram of a microcomputer system for executing the above calculations.

This microcomputer system comprises a CPU, a RAM, a ROM, a backup RAM for storing a neutral point of the steering angle sensor and others and an I/O interface. Input signals to the I/O are the vehicle speed, the right and left collector voltages, a signal from the starter switch, the engine rotational speed, a current signal from a current detector for controlling the motor current, signals from the torque sensor and the steering angle sensor, the signal from a temperature sensor for measuring the temperature of the transistors, a variable assist signal for changing the steering force by the driver, the battery voltage and a key switch signal.

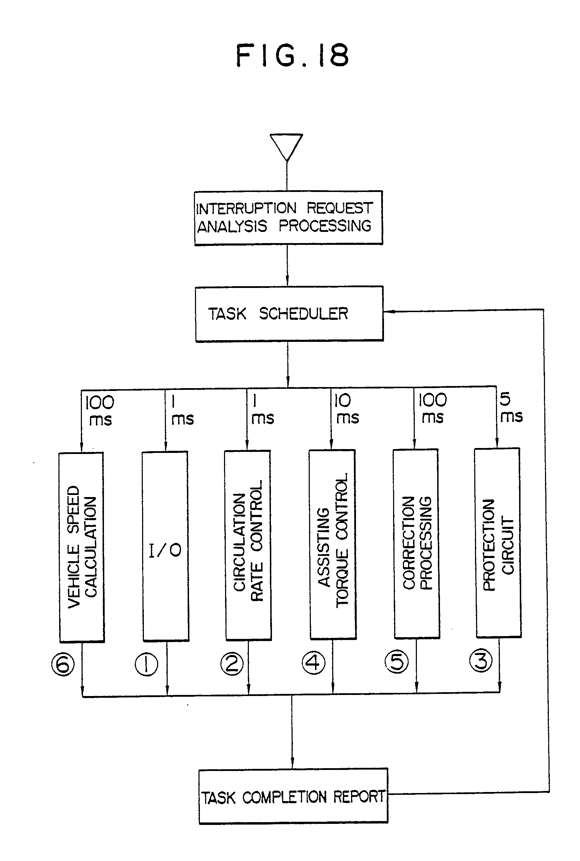

Fig. 18 shows a flowchart for weighting tasks in accordance with a repetition frequency. The input and output processing of the I/O and the circulation rate control have a repetition frequency of 1 ms and have the highest priority. A protection circuit task has a repetition frequency of 5 ms and accordingly the second priority. The assisting torque control is of third priority whereas the vehicle speed calculation and the correction processing are of lowest priority with a repetition frequency of 100 ms. A task scheduler is operated to calculate the weighting of the tasks by counting the times of the timer interruption. The priority order is indicated by the respective numerotation.

As described in the foregoing, according to the present invention, it is possible to sufficiently follow the steering speed of the steering wheel.

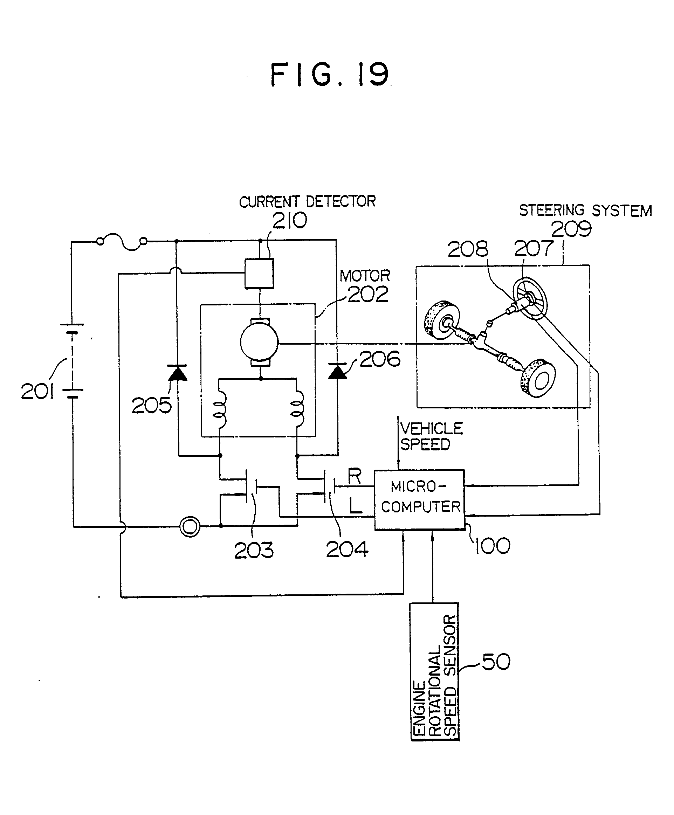

Next, another embodiment of the present invention is shown in Figs. 19 to 23.

According to Fig. 19, an electric motor 202 is connected to a battery 201 and is designed to rotate either clockwisely or counterclockwisely. The drain of a FET 203 is connected to an armature for counterclockwise rotation of the motor 202. Further, the drain of this FET 203 is connected to the battery 201 through a free wheel diode 205 which is connected forwardly. The source of the FET 203 is connected to the battery 201, and the gate is connected to a microcomputer 100. The drain of a FET 204 is connected to an armature for clockwise rotation of the motor 202, and is also connected to the battery 201 through a free wheel diode 206 which is connected forwardly. The source of the FET 204 is connected to the battery 201, and the gate is connected to the micro-computer 100. The microcomputer 100 is supplied with the output signal from an engine rotational speed sensor 50 for detecting the engine rotational speed, a steering angle signal from a steering angle sensor 207 of a steering system 209, and a rotational torque signal corresponding to the steering force of the steering wheel from a torque sensor 208. Further, a signal from a vehicle speed sensor is inputted to the microcomputer 100.

The motor 202 is provided with a current detector 210 for detecting the current supplied to the armature, and the detection value from the current detector 210 is inputted to the microcomputer 100.

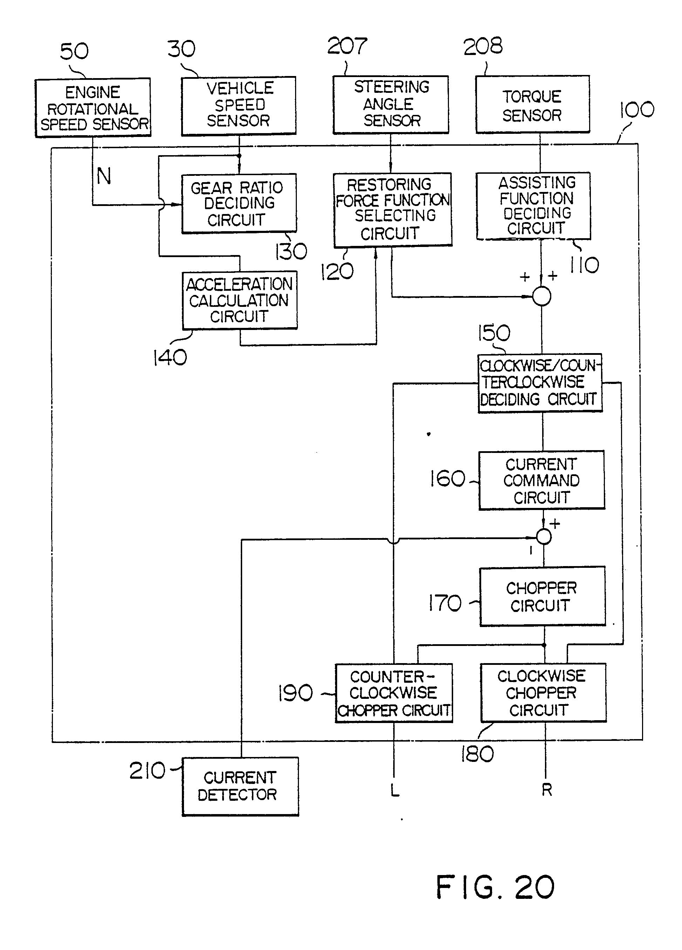

Fig. 20 is a block diagram for explaining the operation of the system shown in Fig. 19.

First, the torque (steering force) detected by the torque sensor 208 is inputted to an assisting function deciding circuit 110, and an assisting function corresponding to the steering force is selected. This assisting function is determined so that the steering force is maintained constant. From this assisting function deciding circuit 110, a current command corresponding to the assisting force is outputted. On the other hand, based on the amount of the steering angle inputted from the steering angle sensor 207, a restoring force function is selected in accordance with the steering angle in a restoring force function selecting circuit 120, and a current command corresponding to the restoring force is outputted. This current command is added to the current command from the assisting function deciding circuit 110, and the resultant value is inputted to a clockwise/counterclockwise deciding circuit 150 which decides whether the steering wheel is turned clockwisely or counterclockwisely.

Further, the vehicle speed signal from the vehicle speed sensor 30 is inputted to a gear ratio deciding circuit 130 and an acceleration calculation circuit 140. The engine rotational speed signal from the engine rotational speed sensor 50 is also inputted to the gear ratio deciding circuit 130. The output from the gear ratio deciding circuit 130 and the output from the acceleration calculation circuit 140 are inputted to the restoring force function selecting circuit 120. Consequently, the restoring force function selecting circuit 120 outputs a value determined by the output from the steering angle sensor 207, the result of the acceleration calculation, and the gear ratio. This gear ratio calculation is conducted in accordance with the following formula:

$$Gear\ ratio = N/V,$$

wherein N is the engine rotational speed, and V is the vehicle speed.

By this gear ratio calculation, a back driving of the vehicle is detected. This may be detected by a backing switch.

Further, the acceleration calculation for detecting the amount of acceleration is conducted in accordance with the formula:

$$amount\ of\ acceleration = V_n - V_{n-1},$$

wherein $V_n$ is the actual vehicle speed at the determination time, and $V_{n-1}$ is the vehicle speed at a constant time period before.

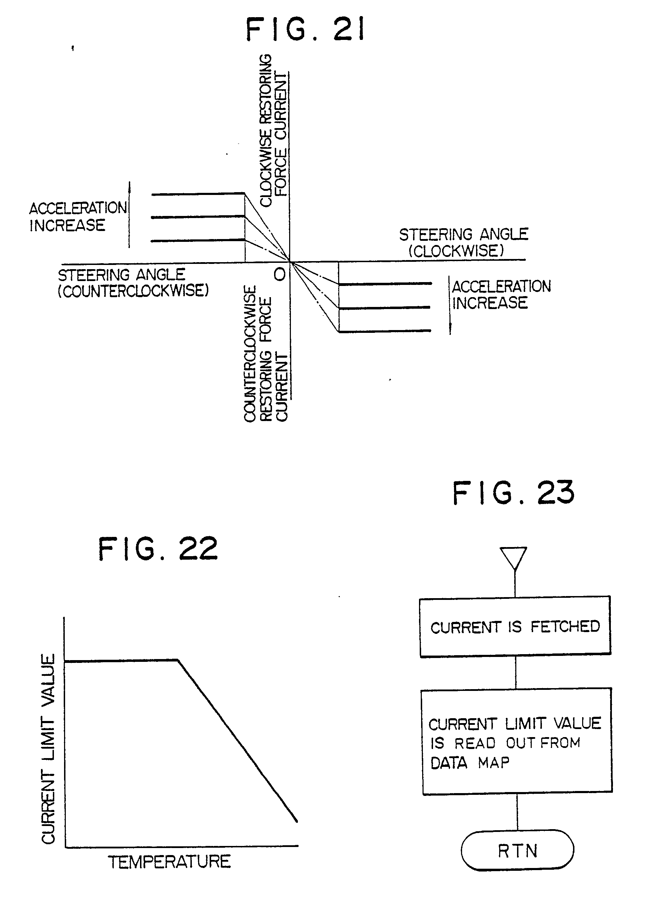

The result of this acceleration calculation is inputted to the restoring force function selecting circuit 120, and the restoring force current is increased in accordance with the characteristic shown in Fig. 21 in proportion to the amount of acceleration. A map corresponding to the characteristics of Fig. 21 is stored in the restoring force function selecting circuit 120. Further, as shown by the dash-and-dot line in Fig. 21, by using a steering angle sensor 207 capable of detecting the steering angle linearly, this characteristic can be achieved by increasing the restoring force current linearly from the steering angle of zero degrees and then by maintaining it at a constant value. However, in this embodiment, for detecting the steering angle, a switch which delivers an output when the steering angle reaches a certain value is employed.

The restoring force and the operating force thus obtained are added to each other, and in the clockwise/counterclockwise deciding circuit 150, it is decided whether the electric motor 202 is to be rotated in clockwise or in counterclockwise direction, and the output is supplied to either a clockwise chopper circuit 180 or a counterclockwise chopper circuit 190. Further, the composite signal inputted to the clockwise/counterclockwise deciding circuit 150 is inputted to a current command circuit 160, and the inputted signal is converted into the absolute value which is outputted as current command value. This current command value is compared with the detected current value outputted from a current detector 210 (cf. also Fig. 19), and the difference to the detected current value is supplied to the chopper circuit 170. In this chopper circuit 170, the difference is converted into a chopping signal which is supplied to the clockwise chopper circuit 180 and the counterclockwise chopper circuit 190, and in accordance with the output signal from the clockwise/counterclockwise deciding circuit 150, either one of the clockwise chopper circuit 180 and the counterclockwise chopper circuit 190 is operated, and the FET 203 or FET 204 is chopped.

The FETs 203 and 204 will be damaged when their temperature is too high. For this reason, there is a limit of the current to be supplied to the FETs 203 and 204 depending on the temperature of the FETs as shown in Fig. 22. Accordingly, a current corresponding to the temperature is supplied to the motor 202, whereby the temperature of the power circuit is detected. For this purpose, a temperature detector is provided in the power section of the electric power assisted steering driving circuit, and the maximum current to be supplied to the motor with respect to the temperature is calculated in the microcomputer 100, which controls the current supplied to the motor so that it does not become equal to or greater than the maximum current limit value. The corresponding flowchart is shown in Fig. 23, whereby the current limit value for the actual temperature is reach out from a data map.

Therefore, in this embodiment, when the automobile is running with leaving free the steering wheel, the straight advancing direction can always be maintained by the restoring force.

Further, with the above described embodiment, it is possible to prevent meandering due to irregular oscillations of the steering wheel during running of the automobile.

Moreover, with this embodiment, it is possible to protect the FETs and the electric motor from being damaged due to excessive temperature rise.

## Claims

1. A method of operating an electric power assisted steering system of automobiles by detecting the steering torque exerted on the steering wheel by the driver, the steering angle and eventually the vehicle speed, and actuating the electric motor in response to the detected values, characterized by the following steps:

a) deciding based on the detected steering torque and the detected steering angle whether the turning of the steering wheel is accelerated or decelerated,

b) generating either a function relating to the acceleration of the steering wheel or a different function relating to the deceleration of the steering wheel in accordance with the decision of step a), and

c) providing an assisting force to the steering wheel via the electric motor in correspondence to the respective function generated in step b).

2. The method according to claim 1, further comprising the following step:

—detecting whether the automobile is advancing or backing and detecting the amount of acceleration of the automobile,

—providing a restoring force to the wheels in a direction to reduce the steering angle of the wheels to zero by supplying a current to an armature of the motor in accordance with the detected advancing or backing and the detected amount of acceleration in correspondence with respective predetermined functions.

3. The method according to claim 2, wherein the restoring force provided to the wheels is made larger when the automobile is advancing than when it is backing.

4. The method according to one of claims 1 to 3, wherein the speed of the automobile is detected, and the electric motor is operated so that the assisting force provided to the steering wheel is higher for lower speeds and lower for higher speeds.

5. An electric power assisted steering system for carrying out the method according to one of claims 1 to 4, comprising

A) a torque sensor (6; 208) for detecting the steering torque exerted on the steering wheel (1),

B) a steering angle sensor (10; 207) for detecting the steering angle,

C) eventually a vehicle speed sensor (20; 30) for detecting the vehicle speed; and

D) an electric motor (7; 202) controlled in response to the output signal of the torque sensor (6; 208), the steering angle sensor (10; 207) and the vehicle speed sensor (20; 30), characterized by

E) acceleration/deceleration deciding means (23) for deciding based on the outputs of the torque sensor (6; 208) and the steering angle sensor (10; 207) whether the turning of the steering wheel is accelerated or decelerated,

F) function generating means (24, 25) for generating a function relating to the acceleration and a different function relating to the deceleration in accordance with the result of the acceleration/deceleration deciding means (23), and

G) assisting force providing means (21, 7, 9, 4; 110, 202) for providing an assisting force to the steering wheel in correspondence to the respective function generated by the function generating means (24, 25) (Figs. 1, 6, 20).

6. The system according to claim 5, wherein the function generating means (24, 25) include a microcomputer (100).

7. The system according to claims 5 or 6, further comprising

—means (140) for detecting whether the automobile is advancing or backing and for detecting the amount of acceleration of the automobile, and

—means (22; 120) for providing a restoring force to the wheels (5) by supplying a current to an armature of the motor (7; 202),

in accordance with the detected advancing or backing and the detected amount of acceleration in correspondence with respective functions either generated by a restoring force function circuit (22) or selected by a restoring force function selecting circuit (120) (Figs. 6, 20).

## Patentansprüche

1. Verfahren zum Betätigen einer elektrischen Servolenkung für Kraftfahrzeuge durch Erfassen des auf das Lenkrad vom Fahrer ausgeübten Lenkdrehmoments, des Lenkwinkels und gegebenenfalls der Fahrzeuggeschwindigkeit sowie Betätigen des Elektromotors nach Maßgabe der erfaßten Werte, gekennzeichnet, durch folgende Schritte:

a) Entscheiden auf der Grundlage des erfaßten Lenkdrehmoments und des erfaßten Lenkwinkels, ob die Drehung des Lenkrads beschleunigt oder verlangsamt ist,

b) Erzeugen entweder einer Funktion betreffend die Lenkradbeschleunigung oder einer anderen Funktion betreffend die Lenkradverlangsamung gemäß der Entscheidung von Schritt a), und

c) Beaufschlagen des Lenkrads mit einer Lenkhelfkraft über den Elektromotor entsprechend der in Schritt b) jeweils erzeugten Funktion.

2. Verfahren nach Anspruch 1, das ferner folgende Schritte umfaßt:

—Feststellen, ob das Fahrzeug vorwärts- oder rückwärtsfährt, und Erfassen des Betrags der Fahrzeugzbeschleunigung,

—Beaufschlagen der Räder mit einer Rückstellkraft in einer Richtung zur Verringerung des Lenkwinkels der Räder auf Null durch Stromzufuhr zu einem Anker des Motors gemäß der erfaßten Vorwärts- oder Rückwärtsfahrt und des erfaßten Beschleunigungsbetrags entsprechend jeweils vorbestimmten Funktionen.

3. Vefahren nach Anspruch 2, wobei die Rückstellkraft, mit der die Räder beaufschlagt werden, bei Vorwärtsfahrt des Fahrzeugs größer als bei Rückwärtsfahrt gemacht wird.

4. Verfahren nach einem der Ansprüche 1 bis 3, wobei die Fahrezeuggeschwindigkeit erfaßt und der Elektromotor so betätigt wird, daß die Lenkhelfkraft, mit der das Lenkrad beaufschlagt wird, bei niedrigeren Geschwindigkeiten höher und bei höheren Geschwindigkeiten geringer ist.

5. Elektrische Servolenkung zur Durchführung des Verfahrens nach einem der Ansprüche 1 bis 4, umfassend

A) einen Drehmomentfühler (6; 208) zum Erfassen des auf das Lenkrad (1) ausgeübten Lenkdrehmoments,

B) einen Lenkwinkelfühler (10; 207) zum Erfassen des Lenkwinkels,

C) gegebenenfalls einen Fahrzeuggeschwindigkeitsfühler (20; 30) zum Erfassen der Fahrzeuggeschwindigkeit; und

D) einen Elektromotor (7; 202), der nach Maßgabe des Ausgangssignals des Drehmomentfühlers (6; 208); des Lenkwinkelfühlers (10; 207) und des Fahrzeuggeschwindigkeitsfühlers (20; 30) gesteuert wird, gekennzeichnet durch

E) einen Beschleunigungs-/Verlangerungs-Entscheider (23), der auf der Grundlage der Ausgangssignale des Drehmomentfühlers (6; 208) und des Lenkwinkelfühlers (10; 207) entscheidet, ob die Drehung des Lenkrads beschleunigt oder verlangsamt ist,

F) Funktionsgeber (24, 25), die eine Funktion betreffend die Beschleunigung und eine andere Funktion betreffend die Verlangsamung gemäß dem Resultat vom Beschleunigungs-/Verlangsaungs-Entscheider (23) erzeugen, und

G) Lenkhelfkraft-Bereitstellungsmittel (21, 7, 9, 4; 110, 202), die das Lenkrad mit einer Lenkhalfkraft entpsrechend der durch die Funktionsgeber (24, 25) jeweils erzeugten Funktion beaufschlagen (Fig. 1, 6, 20).

6. System nach Anspruch 5, wobei die Funktionsgeber (24, 25) einen Mikrocomputer (100) aufweisen.

7. System nach Anspruch 5 oder 6, ferner umfassend

—eine Einheit (140), die feststellt, ob das Fahrzeug vorwärts- oder rückwärtsfährt, und den Betrags der Fahrzeugbeschleunigung erfaßt, und

—eine Einheit (22; 120), die die Räder (5) mit einer Rückstellkraft durch Stromzufuhr zu einem Anker des Motors (7; 202) beaufschlagt,

gemäß der erfaßten Vorwärts- oder Rückwärtsfahrt und dem erfaßten Beschleunigungsbetrag entsprechend den jeweils entweder durch ein Rückstellkraft-Funktionsglied (22) erzeugten oder durch ein Rückstellkraft-Funktionsauswahlglied (120) ausgewählten Funktionen (Fig. 6, 20).

**Revendications**

1. Méthode opératoire d'un système de direction assistée électromotrices d'automobiles par détection du couple de direction exercée sur le volant de direction par le conducteur, de l'angle de direction et éventuellement de la vitesse du véhicule, et par la mise en action du moteur électrique en réponse aux valeurs détectées, caractérisée par les pas suivants:

a) décision en fonction du couple de direction détecté et de l'angle de direction détecté d'accélérer ou de décélérer la rotation du volant de direction,

b) élaboration soit d'une fonction se rapportant à l'accélération du volant de direction, soit d'une autre fonction se rapportant à la décélération du volant de direction selon la décision du pas a), et

c) fourniture d'une force d'assistance du volant de direction via le moteur électrique respectivement adaptée à chacune des fonctions élaborée au cours du pas b).

2. Méthode selon la revendication 1, comprenant les pas additionnels suivants:

—détection du sens, avant ou arrière, du déplacement de l'automobile, et détection de la quantité d'accélération de l'automobile,

—fourniture aux roues d'une force de rappel selon une direction permettant de diminuer l'angle de direction des roues jusqu'à zéro en appliquant un courant à un induit du moteur conformément à la détection du sens avant ou arrière du déplacement et la détection de la quantité d'accélération correspondant aux fonctions respectives prédéfinies.

3. Méthode selon la revendication 2, dans laquelle la force de rappel appliquée aux roues est plus grande lorsque l'automobile se trouve en marche avant que lorsqu'elle se trouve en marche arrière.

4. Méthode selon l'une quelconque des revendications 1 à 3, dans laquelle la vitesse de l'automobile est détectée et le moteur électrique est mis en marche de telle manière que la force d'assistance fournie au volant de direction est plus grande pour les vitesses inférieures et plus faible pour les vitesses supérieures.

5. Système de direction assistée électromotrice servant à appliquer la méthode selon l'une quelconque des revendications 1 à 4, comprenant:

A) un détecteur (6; 208) de couple servant à détecter le couple de direction exercé sur le volant de direction (1),

B) un détecteur (10; 207) d'angle de direction servant à détecter l'angle de direction,

C) éventuellement un détecteur (20; 30) de vitesse du véhicule servant à détecter la vitesse du véhicule, et

D) un moteur électrique (7; 202) commandé en réponse aux signaux de sortie du détecteur (6; 208) de couple, du détecteur (10; 207) d'angle de direction et du détecteur (20; 30) de vitesse du véhicule,

caractérisé par

E) un moyen (23) de décision d'accélération/décélération servant à décider, en fonction des sorties du détecteur (6; 208) de couple et du détecteur (10; 207) de direction s'il convient d'accélérer ou de décélérer la rotation du volant de direction,

F) des moyens (24; 25) générateurs de fonction servant à générer une fonction se rapportant à l'accélération et une autre fonction se rapportant à la décélération conformément au résultat du moyen (23) de décision d'accélération/décélération,

G) des moyens (21, 7, 9, 4; 110, 202) de fourniture de force d'assistance servant à fournir au volant de direction une force d'assistance respectivement adaptée aux fonctions générées par les moyens (24, 25) générateurs de fonction (Figure 1, 6, 20).

6. Système selon la revendication 5, dans lequel les moyens (24, 25) générateurs de fonction comprennent un micro-ordinateur (100).

7. Système selon l'une quelconque des revendications 5 ou 6 comprenant en outre:

—un moyen (140) servant à détecter le sens, avant ou arrière, du déplacement du véhicule, et servant à détecter la quantité d'accélération de l'automobile, et

—un moyen (22; 120) servant à fournir aux roues (5) une force de rappel en appliquant un courant à un induit du moteur (7; 202),

conformément au sens, avant ou arrière, du déplacement détecté, et la quantité d'accélération détectée respectivement adaptée aux fonctions soit générées à l'aide d'un circuit (22) de fonction de force de rappel soit choisies à l'aide d'un circuit (120) de sélection de fonction de force de rappel (Figure 6, 20).

# FIG. 1

STEERING ANGLE SENSOR

10

θ

5

3

4

6 TORQUE SENSOR

9

7 MOTOR

8 REDUCTION MECHANISM

5

τ

CONTROL DEVICE

11

B

V VEHICLE SPEED

θ STEERING ANGLE

1

# FIG . 2

OUTPUT VOLTAGE

+

−    +  TORQUE

−

# FIG. 3

OUTPUT VOLTAGE (SIGNAL $\theta$ )

+

−    O    + STEERING
ANGLE

−

# FIG. 4

# FIG. 5

# FIG. 6

EP 0 190 678 B1

# FIG. 7

(A)

CLOCKWISE

CORRECTION TORQUE OUTPUT

COUNTER-CLOCKWISE

a

b

c

TIME

(B)

CLOCKWISE STEERING FORCE

a

c

STEERING WHEEL IS TURNED CLOCKWISELY

TIME

5

# FIG. 8

FIG.9

FIG.10

FIG. II

MOTOR CURRENT
+

TORQUE SENSOR
OUTPUT τ
+

−

−

FIG. 12

MOTOR CURRENT
+

VEHICLE
SPEED O

VEHICLE SPEED
HIGH

TORQUE SENSOR
OUTPUT τ
+

−

VEHICLE SPEED
HIGH

VEHICLE
SPEED O

−

8

# FIG. 13

# FIG. 14

# FIG. 15

FIG. 16

```
                          ▽
                          │
          ┌───────────────────────────┐
          │  OLD Told  FROM           │ ～101
          │  TORQUE SENSOR            │
          └───────────────────────────┘
                          │
          ┌───────────────────────────┐
          │  PRESENT TORQUE SENSOR    │ ～102
          │  OUTPUT Tnew              │
          └───────────────────────────┘
                          │          ～103
              ╱───────────────────────╲
             ╱ INCREMENT OF TORQUE     ╲
            ╱  SENSOR SIGNAL EQUAL TO   ╲ YES
            ╲  OR GREATER THAN A        ╱────────────────┐
             ╲ CONSTANT VALUE ?        ╱                 │
              ╲───────────────────────╱                 │
                      │ NO                               │
                      │          ～106                   │        ～104
              ╱───────────────────────╲         ╱───────────────────────╲
             ╱ DECREMENT OF TORQUE     ╲ NO   NO╱ INCREMENT OF STEERING   ╲
            ╱  SENSOR SIGNAL EQUAL TO   ╲──────╱  ANGLE SENSOR SIGNAL      ╲
            ╲  OR GREATER THAN A        ╱      ╲  EQUAL TO OR GREATER THAN  ╱
             ╲ CONSTANT VALUE ?        ╱        ╲ A CONSTANT VALUE ?       ╱
              ╲───────────────────────╱          ╲───────────────────────╱
                      │ YES                              │ YES
                      │          ～107                   │        ～105
          ┌───────────────────────────┐      ┌───────────────────────────┐
          │ DECELERATION  TORQUE      │      │ ACCELERATION  TORQUE      │
          │ CALCULATION ACCORDING TO  │      │ CALCULATION ACCORDING     │
          │ MOTOR DECELERATION CALCU- │      │ TO MOTOR ACCELERATION     │
          │ LATION                    │      │ CALCULATION               │
          └───────────────────────────┘      └───────────────────────────┘
                      │                              │
                      └──────────────┬───────────────┘
                                     │
                      ┌───────────────────────────┐
                      │  ASSISTING  TORQUE        │ ～108
                      │  CALCULATION              │
                      └───────────────────────────┘
                                     │
                                     △
```

# FIG.17

# FIG. 18

INTERRUPTION REQUEST ANALYSIS PROCESSING

TASK SCHEDULER

| 100 ms | 1 ms | 1 ms | 10 ms | 100 ms | 5 ms |
|---|---|---|---|---|---|
| VEHICLE SPEED CALCULATION | I/O | CIRCULATION RATE CONTROL | ASSISTING TORQUE CONTROL | CORRECTION PROCESSING | PROTECTION CIRCUIT |
| ⑥ | ① | ② | ④ | ⑤ | ③ |

TASK COMPLETION REPORT

# FIG. 19

FIG. 20

# FIG. 21

# FIG. 22

# FIG. 23